# EUROPEAN PATENT APPLICATION

(11) **EP 4 819 326 A1**
(43) Date of publication of application: **07.10.2026**
(21) Application number: 26165795.1
(22) Date of filing: 18.03.2026
(51) Int. Cl.: H01M 50/211, H01M 10/647, H01M 10/653, H01M 10/658, H01M 50/358, H01M 50/367

(54) **BATTERY MODULE AND BATTERY PACK**

(30) Priority: 26.03.2025 JP 2025052319
(71) Applicant: Toyota Jidosha Kabushiki Kaisha, Toyota-shi, Aichi-ken 471-8571 (JP)
(72) Inventor: TSUNEKAWA, Kunihiro, Toyota-shi, 471-8571 (JP); ARAKAWA, Takuya, Toyota-shi, 471-8571 (JP); IWATA, Makoto, Toyota-shi, 471-8571 (JP); KIMURA, Kenta, Toyota-shi, 471-8571 (JP); KIMURA, Ryo, Toyota-shi, 471-8571 (JP); YANASE, Koichi, Toyota-shi, 471-8571 (JP); YAMASHITA, Osamu, Toyota-shi, 471-8571 (JP)
(74) Representative: Kuhnen & Wacker Patent- und Rechtsanwaltsbüro PartG mbB

(57) **Abstract**

A battery module (50) includes: a plurality of pouch battery cells (52) stacked along a first direction, each of the pouch battery cells (52) including a fragile portion (54a, 54b) at a cell end portion (52a, 52b) located on one side in a second direction that is orthogonal to the first direction; and a module casing (56) that holds the pouch battery cells (52), the module casing (56) including a vertical wall (62) that faces the cell end portion (52a, 52b) of the pouch battery cells (52), and the vertical wall (62) including a module smoke exhaust port (62p, 162p) that discharges smoke from the fragile portion (54a, 54b) downward of the battery module (50).

## Description

### BACKGROUND OF THE INVENTION

### 1. Field of the Invention

The technology disclosed in the present specification relates to a battery module and a battery pack including the same.

### 2. Description of Related Art

Japanese Unexamined Patent Application Publication No. 2006-92905 (JP 2006-92905 A) describes a battery module. The battery module includes a plurality of pouch battery cells. Each of the pouch battery cells is provided with a fragile portion for exhausting smoke. The fragile portion is configured to open preferentially over other portions when the internal pressure and/or the temperature of the pouch battery cell increases. A duct including a smoke exhaust path is connected with the fragile portion of the pouch battery cells.

### SUMMARY OF THE INVENTION

With the structure described above, the smoke exhausted from the pouch battery cells can be properly guided by the duct. On the other hand, there is room for improvement in terms of miniaturizing the battery module. The present disclosure provides a technology for achieving miniaturization of a battery module including a smoke exhaust structure.

A first aspect of the present disclosure provides a battery module including: a plurality of pouch battery cells stacked along a first direction, each of the pouch battery cells including a fragile portion at a cell end portion located on one side in a second direction that is orthogonal to the first direction; and a module casing that holds the pouch battery cells, the module casing including a vertical wall that faces the cell end portion of the pouch battery cells, and the vertical wall including a module smoke exhaust port that discharges smoke from the fragile portion downward of the battery module.

In the configuration described above, a smoke exhaust structure for discharging smoke from the pouch battery cells to the outside of the battery module is incorporated into the vertical wall of the module casing. The vertical wall of the module casing faces, from the second direction, all of the pouch battery cells stacked in the first direction. By providing such a vertical wall with a smoke exhaust structure, the smoke emitted from any pouch battery cell can be reliably discharged to the outside through a relatively short path. This allows the battery module including a smoke exhaust structure to be miniaturized.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically illustrates the configuration of an electrified vehicle;
FIG. 2 illustrates the configuration of a battery pack according to a first embodiment;
FIG. 3 illustrates a battery module as viewed from below;
FIG. 4 illustrates the appearance of a battery cell;
FIG. 5 is a cross-sectional view taken along the line V-V in FIG. 3;
FIG. 6 is a cross-sectional view taken along the line VI-VI in FIG. 5; and
FIG. 7 illustrates the configuration of a battery pack according to a second embodiment.

### DETAILED DESCRIPTION OF EMBODIMENTS

In the battery module according to the above aspect, each of the pouch battery cells further includes an electrode tab provided at the cell end portion, and the electrode tab is located above the fragile portion. With such a configuration, the fragile portion is disposed at a relatively low position at the cell end portion, and thus the smoke emitted from the fragile portion can be discharged to the outside through a shorter path.

In the battery module according to the above aspect, the module casing further includes a first partition wall that divides a space between the pouch battery cells and the vertical wall of the module casing into an upper space and a lower space; the electrode tab of the pouch battery cells is disposed in the upper space; and the fragile portion of the pouch battery cells is disposed in the lower space. With such a configuration, the electrode tab can be protected from the smoke emitted from the fragile portion.

In the battery module according to the above aspect, the first partition wall surrounds a periphery of the upper space. With such a configuration, the electrode tab can be more effectively protected from the smoke emitted from the fragile portion.

In the battery module according to the above aspect, the module casing further includes a plurality of second partition walls that divides the lower space into a plurality of smoke exhaust spaces along the first direction; and the fragile portion of at least one pouch battery cell, among the pouch battery cells, is disposed in each of the smoke exhaust spaces. With such a configuration, when smoke is emitted from one pouch battery cell, damage to the other pouch battery cells caused by the smoke can be suppressed.

In the battery module according to the above aspect, the fragile portion of a single pouch battery cell, among the pouch battery cells, is disposed in each of the smoke exhaust spaces. With such a configuration, when smoke is emitted from one pouch battery cell, damage to the other pouch battery cells caused by the smoke can be more effectively suppressed.

In the battery module according to the above aspect, the vertical wall of the module casing further has a smoke exhaust path that is configured to connect each of the smoke exhaust spaces with the module smoke exhaust port.

In the battery module according to the above aspect, the vertical wall of the module casing further has a smoke exhaust path that is configured to connect each of the smoke exhaust spaces with the module smoke exhaust port; and the smoke exhaust path includes a valve that prevents or restricts a reverse flow of the smoke between at least two of the smoke exhaust spaces. With such a configuration, when smoke is emitted from one pouch battery cell, damage to the other pouch battery cells caused by the smoke can be suppressed. Here, the reverse flow of smoke means that smoke generated in one smoke exhaust space flows into another smoke exhaust space through the smoke exhaust path.

In the battery module according to the above aspect, the valve is a Tesla valve. With such a configuration, the valve that restricts a reverse flow can be constituted without requiring a movable part such as a valve body.

A second aspect of the present disclosure provides a battery pack including: the battery module according to the above aspect; and a housing that houses the battery module and includes a bottom wall that faces the battery module from below, the bottom wall of the housing including a housing smoke exhaust port connected with the module smoke exhaust port and configured to connect the module smoke exhaust port with outside of the housing. With such a configuration, the smoke discharged from the battery module can be discharged to the outside of the housing through the housing smoke exhaust port.

The battery pack according to the above aspect further includes a protective cover that covers the bottom wall of the housing from below, and the housing smoke exhaust port is connected with a space provided between the bottom wall of the housing and the protective cover. With such a configuration, the smoke discharged to the outside of the housing can be at least temporarily trapped in the space between the housing and the protective cover and diluted.

### Embodiments

### First Embodiment

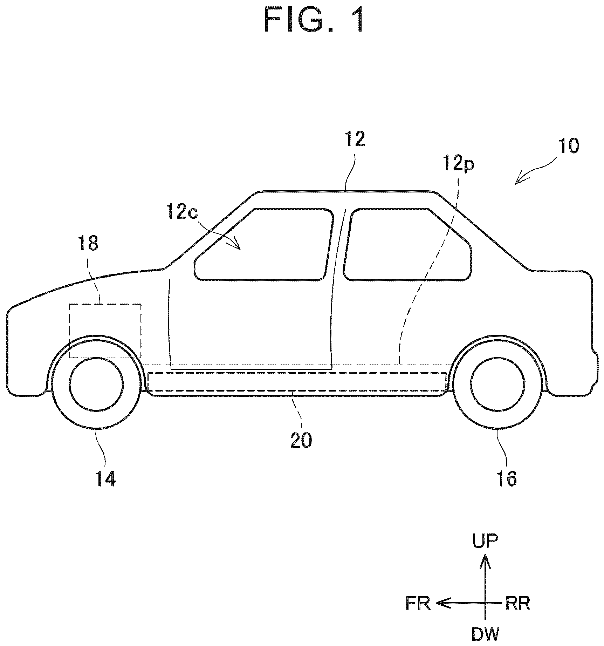

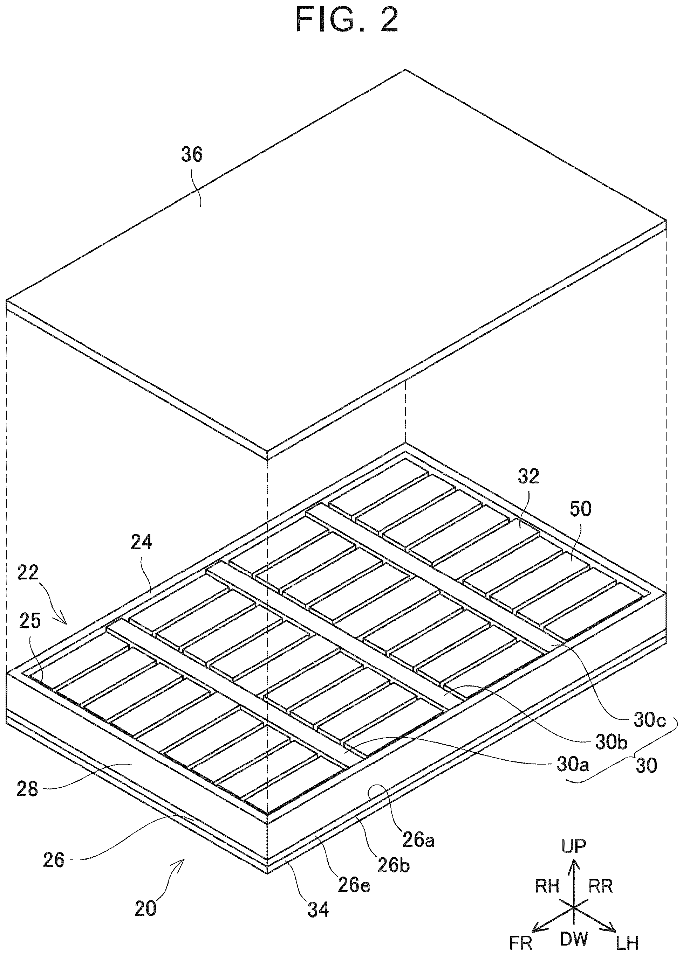

A battery module 50 (see FIG. 2) and a battery pack 20 including the battery module 50 according to a first embodiment will be described with reference to the drawings. The battery pack 20 according to the present embodiment can be mounted on an electrified vehicle 10. The electrified vehicle 10 will be described with reference to FIG. 1. The electrified vehicle 10 is a battery electric vehicle (BEV). However, the electrified vehicle 10 is not limited to a BEV, and may be another type of electrified vehicle such as a hybrid electric vehicle (HEV) or a plug-in hybrid electric vehicle (PHEV).

Here, the directions of the battery module 50 and the battery pack 20 in the present specification and the drawings correspond to the directions with the battery module 50 and the battery pack 20 mounted on the electrified vehicle 10. In the drawings, a direction FR indicates the forward direction in the front-rear direction of the electrified vehicle 10, and a negative direction RR of the direction FR indicates the rearward direction in the front-rear direction of the electrified vehicle 10. A direction LH indicates the leftward direction in the right-left direction of the electrified vehicle 10, and a negative direction RH of the direction LH indicates the rightward direction in the right-left direction of the electrified vehicle 10. A direction UP indicates the upward direction in the up-down direction of the electrified vehicle 10, and a negative direction DW of the direction UP indicates the downward direction in the up-down direction of the electrified vehicle 10.

The electrified vehicle 10 includes a vehicle body 12, a plurality of wheels 14 and 16, and a motor unit 18, in addition to the battery pack 20. The vehicle body 12 is made of a metal as a steel-based material, an aluminum-based material, or the like, for example. The wheels 14 and 16 support the vehicle body 12. The wheels 14 and 16 include a pair of front wheels 14 located at the front of the vehicle body 12 and a pair of rear wheels 16 located at the rear of the vehicle body 12. The front wheels 14 are located on the right and left sides of the vehicle body 12, respectively. The rear wheels 16 are located on the right and left sides of the vehicle body 12, respectively. The vehicle body 12 has a cabin 12c inside. The cabin 12c is configured to accommodate an occupant. The vehicle body 12 includes a floor panel 12p. The floor panel 12p defines the floor of the cabin 12c.

The motor unit 18 includes a travel motor that drives the front wheels 14. However, the motor unit 18 is not limited to driving the front wheels 14, but may drive at least one of the wheels 14 and 16. The motor unit 18 may be disposed forward of the cabin 12c.

The battery pack 20 is electrically connected with the motor unit 18 via, for example, a power conversion device (not illustrated). The battery pack 20 supplies the motor unit 18 with power to drive the wheels 14 and 16. The battery pack 20 is disposed at the lower part of the vehicle body 12. Specifically, the battery pack 20 is disposed below the floor panel 12p of the vehicle body 12. The battery pack 20 is supported by the vehicle body 12. For example, the battery pack 20 may be fixed to the right and left side sills of the vehicle body 12.

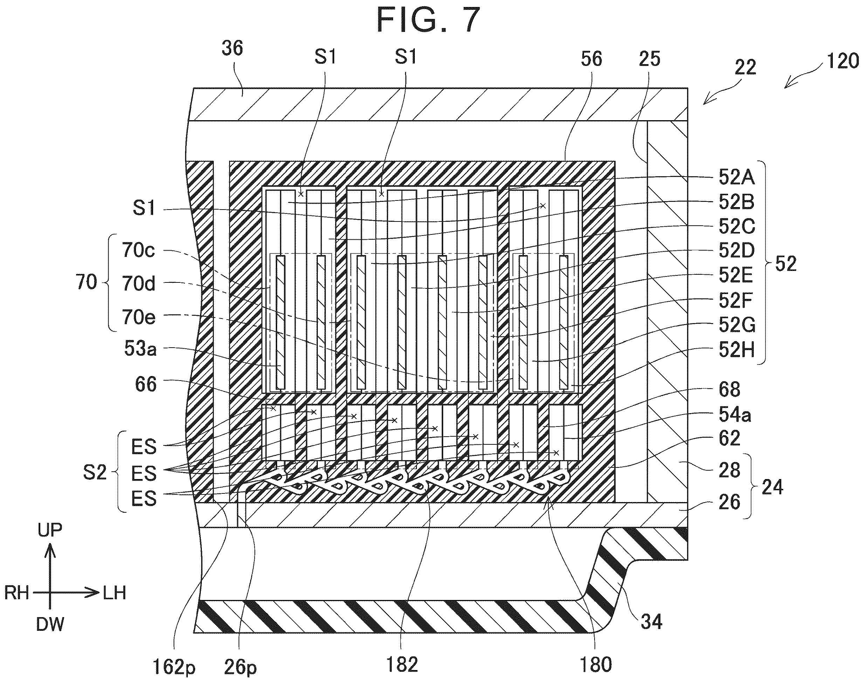

The battery pack 20 will be described in detail with reference to FIGS. 2 to 7. As illustrated in FIG. 2, the battery pack 20 is a thin battery pack having a small dimension in the up-down direction. The battery pack 20 has a flat rectangular parallelepiped shape. The dimension of the battery pack 20 in the up-down direction is smaller than the dimension of the battery pack 20 in the right-left direction, and the dimension of the battery pack 20 in the right-left direction is smaller than the dimension of the battery pack 20 in the front-rear direction.

The battery pack 20 includes a housing 22, a protective cover 34, and a top cover 36, in addition to a plurality of battery modules 50. The housing 22 houses the battery modules 50.

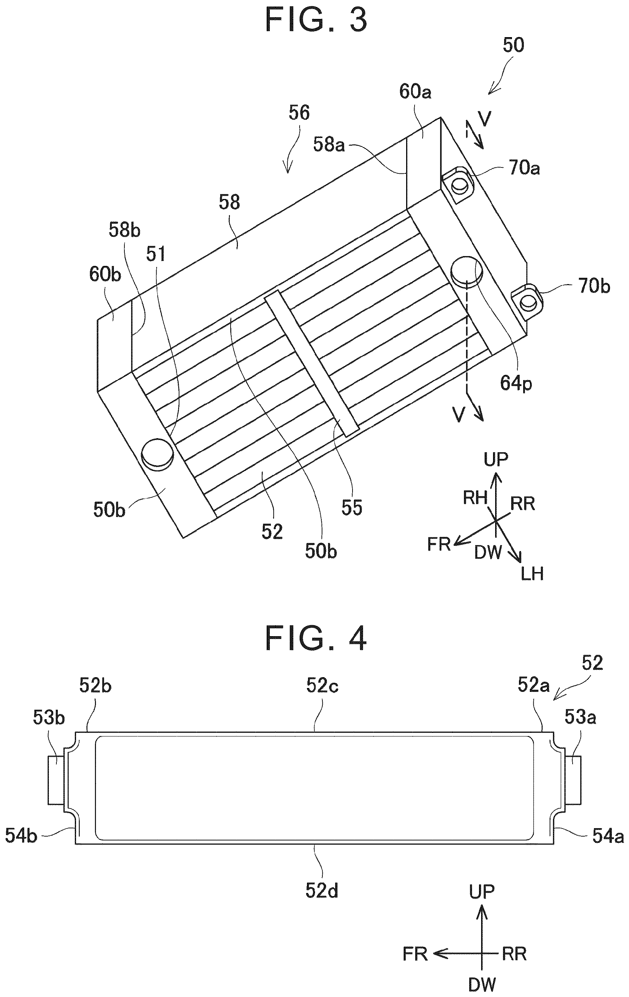

As illustrated in FIG. 3, the battery module 50 includes a plurality of battery cells 52 and a module casing 56 that houses the battery cells 52. In a modification, the battery module 50 may include only one battery cell 52. Each of the battery cells 52 is a secondary battery cell configured to be chargeable and dischargeable. The secondary battery cell is, for example, a lithium ion battery cell. The battery module 50 has an opening 51 in a lower surface 50b. On the lower surface 50b of the battery module 50, the end surfaces of the battery cells 52 are exposed through the opening 51. Each battery cell 52 has a flat shape. The battery cells 52 are stacked along the thickness direction (the right-left direction in FIG. 3). The battery cells 52 are constrained by a constraining band 55 in the state of being compressed in the stacking direction. Each battery cell 52 is elongated. The battery module 50 includes a positive electrode terminal 70a and a negative electrode terminal 70b at one end (rear end in FIG. 3) of the battery cells 52 in the longitudinal direction (front-rear direction in FIG. 3). The opening 51 of the battery module 50 is defined by the module casing 56. The module casing 56 is made of, for example, a resin.

The housing 22 is made of a metal such as aluminum, for example. As illustrated in FIG. 2, the housing 22 includes a housing body 24 and a plurality of beams 30a, 30b, 30c, and 32. The housing body 24 includes a bottom wall 26 on which the battery modules 50 are disposed, and a peripheral wall 28 standing upright from an outer peripheral edge 26e of the bottom wall 26. The peripheral wall 28 extends around the outer peripheral edge 26e of the bottom wall 26. The housing body 24 has an opening 25 that opens upward. The opening 25 is defined by the inner surface of the peripheral wall 28. The top cover 36 is a plate-shaped member and is disposed so as to close the opening 25 of the housing body 24 from above. The top cover 36 is made of a metal such as aluminum, for example. The protective cover 34 covers the bottom wall 26 from below.

The beams 30a, 30b, 30c, and 32 are skeleton members of the housing 22. The beams 30a, 30b, 30c, and 32 extend along an upper surface 26a of the bottom wall 26. The beams 30a, 30b, 30c, and 32 include a plurality of first beams 30a, 30b, and 30c and a second beam 32. The first beams 30a, 30b, and 30c extend in the right-left direction so as to cross the upper surface 26a of the bottom wall 26. The first beams 30a, 30b, and 30c each extend from the left peripheral wall 28 to the right peripheral wall 28. The second beam 32 extends in the front-rear direction so as to cross the upper surface 26a of the bottom wall 26. The first beams 30a, 30b, and 30c are arranged at intervals in the front-rear direction. The second beam 32 is disposed at the center of the bottom wall 26 in the right-left direction. The first beams 30a, 30b, and 30c (hereinafter referred to as the first beams 30) are disposed orthogonally to the second beam 32. As illustrated in FIG. 2, the first beams 30 extend across the second beam 32. The first beams 30 and the second beam 32 are formed so as to be able to fit together. The beams 30 and 32 are fixed to the upper surface 26a of the bottom wall 26.

Next, the battery module 50 will be described in detail. As illustrated in FIGS. 3 and 4, each battery cell 52 housed in the battery module 50 is a pouch battery (also called a laminate battery) cell. Each battery cell 52 includes electrode tabs 53a and 53b and fragile portions 54a and 54b at both end portions 52a and 52b, respectively, in the longitudinal direction (i.e., the front-rear direction in the present embodiment). The electrode tab 53a and the fragile portion 54a are disposed at the rear end portion 52a of each battery cell 52, and the electrode tab 53b and the fragile portion 54b are disposed at the front end portion 52b of each battery cell 52. Each of the electrode tabs 53a and 53b is a sheet-like member for extracting electricity from the inside of the battery cell 52 to the outside. In the up-down direction, the distance between each of the electrode tabs 53a and 53b and an upper end 52c of the battery cell 52 is shorter than the distance between each of the electrode tabs 53a and 53b and a lower end 52d of the battery cell 52.

Each of the fragile portions 54a and 54b is a part of a portion where the laminate films that are the exterior materials of the battery cell 52 are welded together. The fragile portions 54a and 54b are provided on each battery cell 52 for the purpose of, for example, exhausting smoke. At the fragile portions 54a and 54b, the welded laminate films are separated when a predetermined internal battery pressure or battery temperature is reached. This allows the smoke generated inside the battery cell 52 to be discharged to the outside of the battery cell 52. By way of example, the laminate films are aluminum laminate films. The electrode tabs 53a and 53b are located above the corresponding fragile portions 54a and 54b.

The module casing 56 includes a casing body 58 and a pair of covers 60a and 60b. The covers 60a and 60b include a rear cover 60a disposed at a rear end 58a of the casing body 58 in the longitudinal direction, and a front cover 60b disposed at a front end 58b of the casing body 58 in the longitudinal direction. As illustrated in FIGS. 3 and 4, the rear end portions 52a of the battery cells 52 are covered from the rear by the rear cover 60a. The front end portions 52b of the battery cells 52 are covered from the front by the front cover 60b.

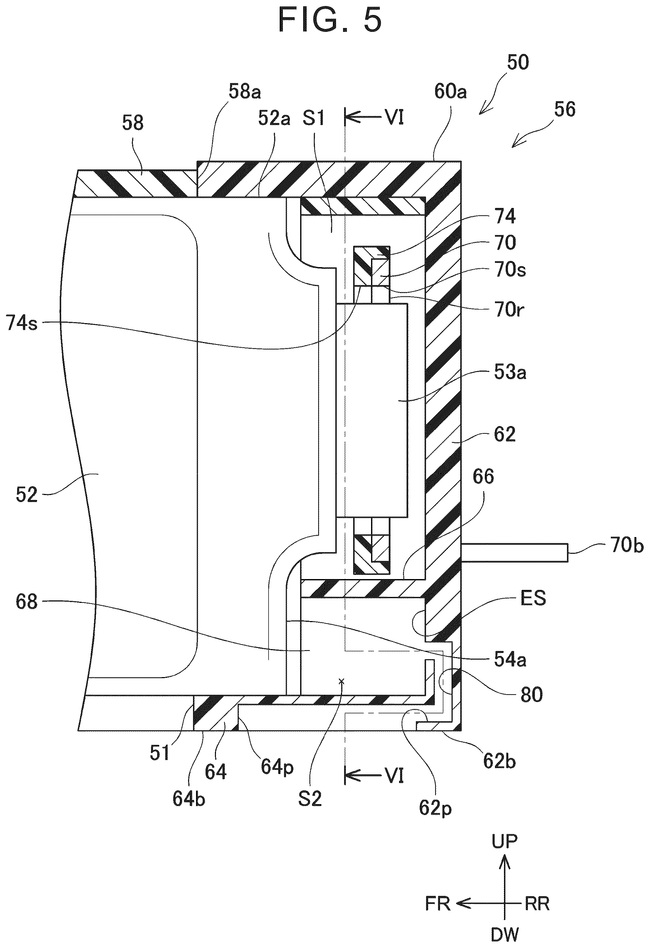

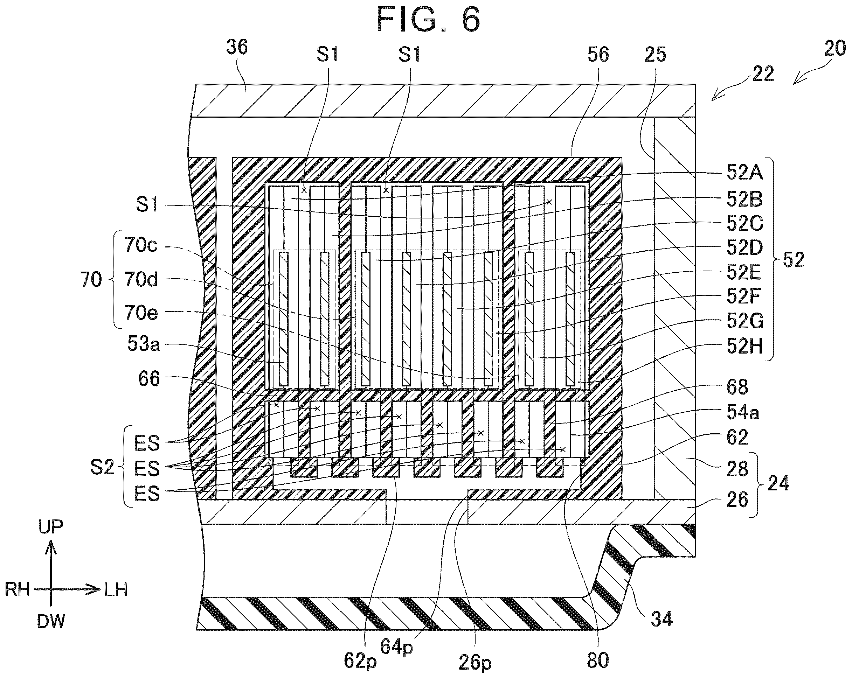

The rear end portion of the battery module 50 will be described with reference to FIGS. 5 and 6. As illustrated in FIG. 5, each battery module 50 includes a plurality of bus bars 70 attached to the rear end portions 52a of the battery cells 52, and a bus bar holder 74. The bus bars 70 are made of a metal such as copper, for example. The bus bars 70 electrically connect two or more of the electrode tabs 53a. The bus bar holder 74 holds the bus bars 70. The bus bar holder 74 is made of an insulating material such as a resin, for example. The bus bar holder 74 has a plurality of slits 74s that penetrates the bus bar holder 74 in the front-rear direction. Each bus bar 70 has a plurality of slits 70s that penetrates the bus bar 70 in the front-rear direction, as with the bus bar holder 74. Each electrode tab 53a passes through the slit 74s of the bus bar holder 74 to be guided to the slit 70s of the corresponding bus bar 70. The electrode tab 53a that has passed through the slit 70s of the bus bar 70 is joined to a rear surface 70r of the bus bar 70. Of the bus bars 70, the bus bar 70 located at one end in the right-left direction (the right end in the present embodiment) includes a positive electrode terminal 70a (see FIG. 3) at its tip. Of the bus bars 70, the bus bar 70 located at the other end in the right-left direction (the left end in the present embodiment) includes a negative electrode terminal 70b (see FIG. 3) at its tip. In FIG. 5, only the negative electrode terminal 70b is illustrated.

The rear cover 60a includes a vertical wall 62, a side wall 64, a first partition wall 66, and a plurality of second partition walls 68. The vertical wall 62 faces the rear end portions 52a of the battery cells 52 from behind. The side wall 64 extends from the peripheral edge of the vertical wall 62 toward the casing body 58. A smoke exhaust space ES is formed between the vertical wall 62 and the rear end portions 52a of the battery cells 52. The vertical wall 62 is provided with a first module smoke exhaust port 62p that discharges smoke from the fragile portion 54a downward of the battery module 50. A smoke exhaust path 80 is formed between the smoke exhaust space ES and the first module smoke exhaust port 62p. By way of example, a second module smoke exhaust port 64p is provided in a lower surface 64b of the side wall 64. The first module smoke exhaust port 62p and the second module smoke exhaust port 64p are in communication with each other within the side wall 64. In a modification, the second module smoke exhaust port 64p may not be provided in the side wall 64. For example, the first module smoke exhaust port 62p may be provided in a lower surface 62b of the vertical wall 62.

In the present embodiment, a smoke exhaust structure for discharging smoke from each battery cell 52 to the outside of the battery module 50 is incorporated into the vertical wall 62 of the module casing 56. The vertical wall 62 of the module casing 56 faces, from behind, all of the battery cells 52 stacked in the right-left direction. By providing such a vertical wall 62 with a smoke exhaust structure, the smoke emitted from each battery cell 52 can be reliably discharged to the outside through a relatively short path. This allows the battery module 50 including a smoke exhaust structure to be miniaturized.

Furthermore, in the present embodiment, the first partition wall 66 extends from the vertical wall 62 toward the battery cells 52. The first partition wall 66 divides the space between the vertical wall 62 and the battery modules 50 into an upper space S1 and a lower space S2. The electrode tabs 53a of the battery cells 52 are disposed in the upper space S1, and the fragile portions 54a are disposed in the lower space S2. With such a configuration, the electrode tabs 53a can be protected from the smoke emitted from the fragile portions 54a. The first partition wall 66 may extend around the periphery of the upper space S1 so as to surround the electrode tabs 53a of the battery cells 52. With such a configuration, the electrode tabs 53a of the battery cells 52 can be more effectively protected from the smoke emitted from the fragile portions 54a.

As illustrated in FIG. 6, the bus bars 70 include a first bus bar 70c, a second bus bar 70d, and a third bus bar 70e. The battery cells 52 include a plurality of battery cells 52A to 52H. The electrode tabs 53a of the two battery cells 52A and 52B are connected with the first bus bar 70c. The electrode tabs 53a of the four battery cells 52C to 52F are connected with the second bus bar 70d. The electrode tabs 53a of the two battery cells 52G and 52H are connected with the third bus bar 70e. By way of example, the first partition wall 66 divides the upper space S1 into a plurality of upper spaces S1, and one of the bus bars 70c to 70e is disposed in each of the upper spaces S1 divided by the first partition wall 66. The first partition wall 66 divides the space between the vertical wall 62 and the battery cells 52A and 52B into an upper space S1 and a lower space S2. The first partition wall 66 divides the space between the vertical wall 62 and the battery cells 52C to 52F into an upper space S1 and a lower space S2. The first partition wall 66 divides the space between the vertical wall 62 and the battery cells 52G and 52H into an upper space S1 and a lower space S2. The first partition wall 66 may extend around the periphery of each upper space S1 so as to surround each of the electrode tabs 53a of the battery cells 52. With such a configuration, each of the electrode tabs 53a can be more effectively protected from the smoke emitted from the fragile portions 54a.

The second partition walls 68 divide the lower space S2, divided by the first partition wall 66, along the right-left direction into a plurality of smoke exhaust spaces ES. In this case, the fragile portion 54a of one of the battery cells 52 may be disposed in each of the smoke exhaust spaces ES. With such a configuration, when smoke is emitted from one battery cell 52, damage to the other battery cells caused by the smoke can be more effectively suppressed. The number of battery cells 52 disposed in each of the smoke exhaust spaces ES is not limited to one, but it is only necessary that the fragile portion 54a of at least one battery cell 52 should be disposed in each of the smoke exhaust spaces ES. With such a configuration, when smoke is emitted from one battery cell 52, damage to the other battery cells 52 caused by the smoke can be suppressed.

In the battery pack 20 of the present embodiment, the bottom wall 26 of the housing 22 is provided with a housing smoke exhaust port 26p connected with the first module smoke exhaust port 62p of the vertical wall 62 and configured to connect the first module smoke exhaust port 62p with the outside of the housing 22. With such a configuration, the smoke discharged from the battery module 50 can be discharged to the outside of the housing 22 through the housing smoke exhaust port 26p.

In particular, the battery pack 20 is provided with the protective cover 34 that covers the bottom wall 26 of the housing 22. A space connected with the first module smoke exhaust port 62p is formed between the bottom wall 26 of the housing 22 and the protective cover 34. With such a configuration, the smoke discharged to the outside of the housing 22 can be at least temporarily trapped in the space between the housing 22 and the protective cover 34 and diluted.

The front cover 60b of the module casing 56 can be configured to have a smoke exhaust structure, as with the rear cover 60a.

The right-left direction is an example of a "first direction" according to the technology of the present specification. The front-rear direction is an example of a "second direction" according to the technology of the present specification. The rear end portion 52a and the front end portion 52b of the battery cell 52 are examples of a cell end portion. The first module smoke exhaust port 62p of the vertical wall 62 is an example of a "module smoke exhaust port" according to the technology of the present specification.

### Second Embodiment

A battery pack 120 according to a second embodiment will be described. In the present embodiment, the smoke exhaust structure of the vertical wall 62 of the module casing 56 is different from that of the first embodiment. A module smoke exhaust port 162p provided in the vertical wall 62 connects with the housing smoke exhaust port 26p of the housing 22 without passing through the side wall of the module casing 56. The vertical wall 62 of the module casing 56 has a smoke exhaust path 180 that connects each of the smoke exhaust spaces ES with the module smoke exhaust port 162p. The smoke exhaust path 180 includes a valve 182 that prevents or restricts a reverse flow of smoke between all of the smoke exhaust spaces ES (eight smoke exhaust spaces ES in the present embodiment). With such a configuration, when smoke is emitted from one battery cell 52, damage to the other battery cells 52 caused by the smoke can be suppressed. Here, the reverse flow of smoke means that smoke generated in one smoke exhaust space ES flows into another smoke exhaust space ES through the smoke exhaust path 180. The valve 182 is not limited to being provided between all of the smoke exhaust spaces ES, but it is only necessary that the valve 182 should be able to prevent or restrict a reverse flow of smoke between at least two or more smoke exhaust spaces ES. In the present embodiment, the valve 182 is a Tesla valve. With such a configuration, the valve 182 that restricts a reverse flow can be constituted without requiring a movable part such as a valve body.

Although not particularly limited, the battery pack 20 may include a cooler disposed between the bottom wall 26 of the housing 22 and the protective cover 34. In this case, the cooler may be provided with a cooler smoke exhaust port located within a range that does not interfere with a cooling flow path, the cooler smoke exhaust port being connected with the module smoke exhaust port 62p, 162p and being able to connect the module smoke exhaust port 62p, 162p with the space between the cooler and the protective cover 34.

Although the embodiments of the present technology have been described in detail above, these are merely exemplary and do not limit the scope of the claims. The technology set forth in the claims includes various modifications and alterations of the specific examples indicated above. The technical elements described in the present specification or the drawings exhibit technical utility either alone or in various combinations, and are not limited to the combinations set forth in the claims as originally filed. Furthermore, the technology indicated in the present specification or the drawings can achieve a plurality of objects at the same time, and achieving one of the objects has in itself technical utility.

## Claims

1. A battery module (50) comprising:
a plurality of pouch battery cells (52) stacked along a first direction, each of the pouch battery cells (52) including a fragile portion (54a, 54b) at a cell end portion (52a, 52b) located on one side in a second direction that is orthogonal to the first direction; and
a module casing (56) that holds the pouch battery cells (52), the module casing (56) including a vertical wall (62) that faces the cell end portion (52a, 52b) of the pouch battery cells (52), and the vertical wall (62) including a module smoke exhaust port (62p, 162p) that discharges smoke from the fragile portion (54a, 54b) downward of the battery module (50).

2. The battery module (50) according to claim 1, wherein:
each of the pouch battery cells (52) further includes an electrode tab (53a, 53b) provided at the cell end portion (52a, 52b); and
the electrode tab (53a, 53b) is located above the fragile portion (54a, 54b).

3. The battery module (50) according to claim 2, wherein:
the module casing (56) further includes a first partition wall (66) that divides a space between the pouch battery cells (52) and the vertical wall (62) of the module casing (56) into an upper space (S1) and a lower space (S2);
the electrode tab (53a, 53b) of the pouch battery cells (52) is disposed in the upper space (S1); and
the fragile portion (54a, 54b) of the pouch battery cells (52) is disposed in the lower space (S2).

4. The battery module (50) according to claim 3, wherein the first partition wall (66) surrounds a periphery of the upper space (S1).

5. The battery module (50) according to claim 3, wherein:
the module casing (56) further includes a plurality of second partition walls (68) that divides the lower space (S2) into a plurality of smoke exhaust spaces (ES) along the first direction; and
the fragile portion (54a, 54b) of at least one pouch battery cell (52), among the pouch battery cells (52), is disposed in each of the smoke exhaust spaces (ES).

6. The battery module (50) according to claim 5, wherein the fragile portion (54a, 54b) of a single pouch battery cell (52), among the pouch battery cells (52), is disposed in each of the smoke exhaust spaces (ES).

7. The battery module (50) according to claim 5, wherein the vertical wall (62) of the module casing (56) further includes a smoke exhaust path (80) that is configured to connect each of the smoke exhaust spaces (ES) with the module smoke exhaust port (62p).

8. The battery module (50) according to claim 5, wherein:
the vertical wall (62) of the module casing (56) further has a smoke exhaust path (180) that configured to connect each of the smoke exhaust spaces (ES) with the module smoke exhaust port (162p); and
the smoke exhaust path (180) includes a valve (182) that prevents or restricts a reverse flow of the smoke between at least two of the smoke exhaust spaces (ES).

9. The battery module (50) according to claim 8, wherein the valve (182) is a Tesla valve.

10. A battery pack (20, 120) comprising:
the battery module (50) according to claim 1; and
a housing (24) that houses the battery module (50) and includes a bottom wall (26) that faces the battery module (50) from below, the bottom wall (26) of the housing (24) including a housing smoke exhaust port (26p) connected to the module smoke exhaust port (62p, 162p) and configured to connect the module smoke exhaust port (62p, 162p) with outside of the housing (24).

11. The battery pack (20, 120) according to claim 10, further comprising a protective cover (34) that covers the bottom wall (26) of the housing (24) from below, wherein
the housing smoke exhaust port (26p) is connected with a space provided between the bottom wall (26) of the housing (24) and the protective cover (34).
